## Europäisches Patentamt
## European Patent Office
## Office européen des brevets

(19)

(11) Veröffentlichungsnummer: **0 019 904**
**B1**

(12) **EUROPÄISCHE PATENTSCHRIFT**

(45) Veröffentlichungstag der Patentschrift:
29.08.84

(51) Int. Cl.³: **H 02 H 3/08**

(21) Anmeldenummer: **80102952.1**

(22) Anmeldetag: **27.05.80**

(54) Überstromschutzrelais.

(30) Priorität: **29.05.79 JP 65682/79**

(43) Veröffentlichungstag der Anmeldung:
**10.12.80 Patentblatt 80/25**

(45) Bekanntmachung des Hinweises auf die Patenterteilung:
**29.08.84 Patentblatt 84/35**

(84) Benannte Vertragsstaaten:
**AT CH DE FR GB LI**

(56) Entgegenhaltungen:
**DE - A - 2 221 048**
**US - A - 3 114 078**
**US - A - 3 299 322**
**US - A - 3 555 354**
**US - A - 4 012 669**

(73) Patentinhaber: **FUJI ELECTRIC CO. LTD., 1-1,**
**Tanabeshinden, Kawasaki-ku, Kawasaki 210 (JP)**

(72) Erfinder: **Tanaka, Junzoh, Dipl.-Ing., 265-7 Kakinuma,**
**Kumagaya-shi Saitama (JP)**
Erfinder: **Kohanawa, Akihiko, Dipl.-Ing., c/o Fuji Denki**
**Dai 2 Fuyoryo No. 2-4-10 Enokido, Fukiage-cho**
**Kitaadachi-gun Saitama-ken (JP)**
Erfinder: **Takasaki, Yasuo, Dipl.-Ing.,**
**543-1 Jinboharamachi Kamisatomachi, Kodama-gun**
**Saitama (JP)**

(74) Vertreter: **Blumbach Weser Bergen Kramer Zwirner**
**Hoffmann Patentanwälte, Radeckestrasse 43,**
**D-8000 München 60 (DE)**

## Beschreibung

Die Erfindung betrifft ein Überstromschutzrelais nach dem Oberbegriff des Patentanspruchs 1.

Ein bekanntes Überstromschutzrelais (US-A-3 634 730) ist schematisch in Fig. 1 gezeigt. Darin sind 10 Stromwandler, die primärseitig je den Strom einer Leitung eines Mehrphasen-Wechselstromnetzes erfassen und sekundärseitig an einen Maximumdetektor 14 angeschlossen sind. Der Maximumdetektor 14 stellt fest, in welcher der Phasen des Mehrphasen-Wechselstromnetzes der Augenblicksstrom am größten ist, und liefert einen diesem größten Augenblicksstrom entsprechenden Strom an einen Stromspannungsumsetzer 16. Dieser wandelt den Strom in eine entsprechende Spannung um, mit welcher drei Auslöseglieder, nämlich ein Auslöseglied 18 mit Langzeitverzögerung, ein Auslöseglied 20 mit Kurzzeitverzögerung und ein verzögerungsloses Auslöseglied 22 beaufschlagt werden. Den Auslösegliedern ist ein Treiber 24 nachgeschaltet, der über eine Spule 26 Schalter 12 in den Leitungen des Mehrphasen-Wechselstromnetzes öffnen kann. Wenn der höchste der mittels der Stromwandler erfaßten Augenblicksströme einen ersten Schwellenwert übersteigt, bewirkt das Auslöseglied 18 nach einer Langzeitverzögerung über den Treiber 24 ein Öffnen der Schalter 12. Überschreitet der genannte Augenblicksstrom einen zweiten Schwellenwert, der höher als der erste Schwellenwert liegt, dann bewirkt das Auslöseglied 20 nach einer Kurzzeitverzögerung ebenfalls über den Treiber 24 ein Öffnen der Schalter 12. Die Verzögerungszeit der Langzeitverzögerung und der Kurzzeitverzögerung kann dabei von der Höhe des Augenblicksstromes abhängen, insbesondere dem Augenblicksstrom bzw. dem Quadrat des Augenblicksstromes umgekehrt proportional sein. Übersteigt dieser höchste der Augenblicksströme einen dritten Schwellenwert, der über den ersten beiden Schwellenwerten liegt, dann bewirkt das verzögerungslose Auslöseglied 22 über den Treiber 24 ein sofortiges Öffnen der Schalter 12.

Wenn der höchste der Augenblicksströme der verschiedenen Phasen, der nachfolgend einfach als Laststrom IL bezeichnet werden soll, einen sehr hohen Wert an der Grenze des Zulässigen erreicht, dann sollen die Schalter 12 den Stromkreis sofort unterbrechen. Dies ist Aufgabe des verzögerungslosen Auslöseglieds 22. Hierbei treten bei dem bekannten Überstromschutzrelais jedoch Probleme auf, die in einer Sättigung der Stromwandler 10 begründet sind. Diese bei hohen Lastströmen auftretende Sättigung verringert das Übersetzungsverhältnis der Stromwandler, so daß sekundärseitig der Stromwandler ein relativ zum primärseitigen Strom geringerer Strom auftritt, als es ohne Sättigung der Fall wäre. Dies kann zu einer Verzögerung der Schutzrelaisauslösung und damit zu einem Verschweißen der Schalterkontakte oder einer anderen Beschädigung der Schalter führen. Diese Gefahr ist insbesondere bei Schaltern kleiner Schaltleistungen vorhanden.

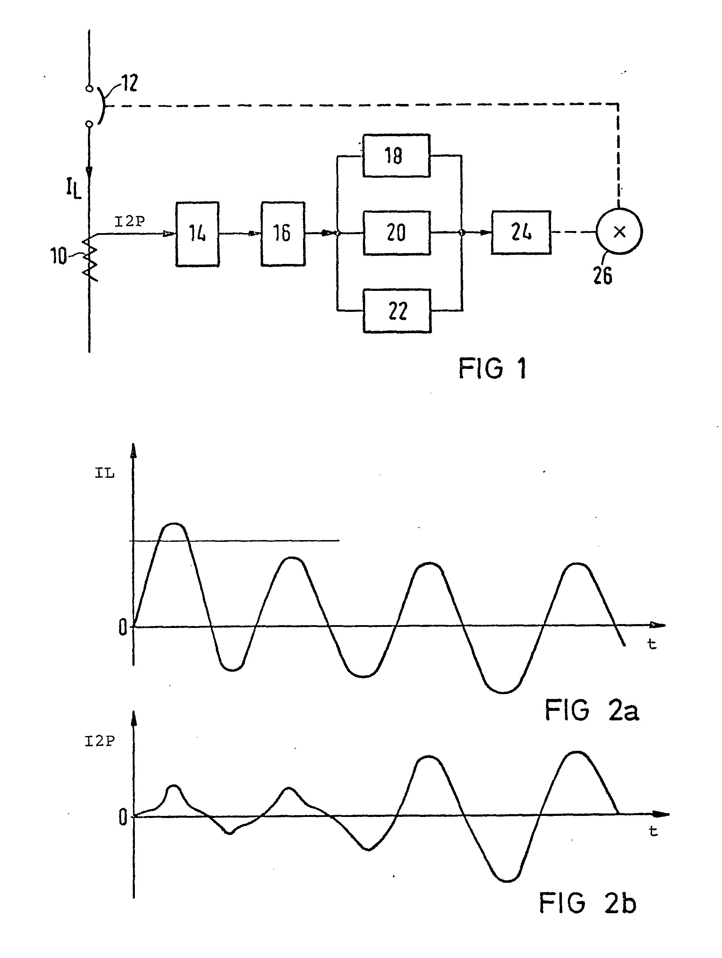

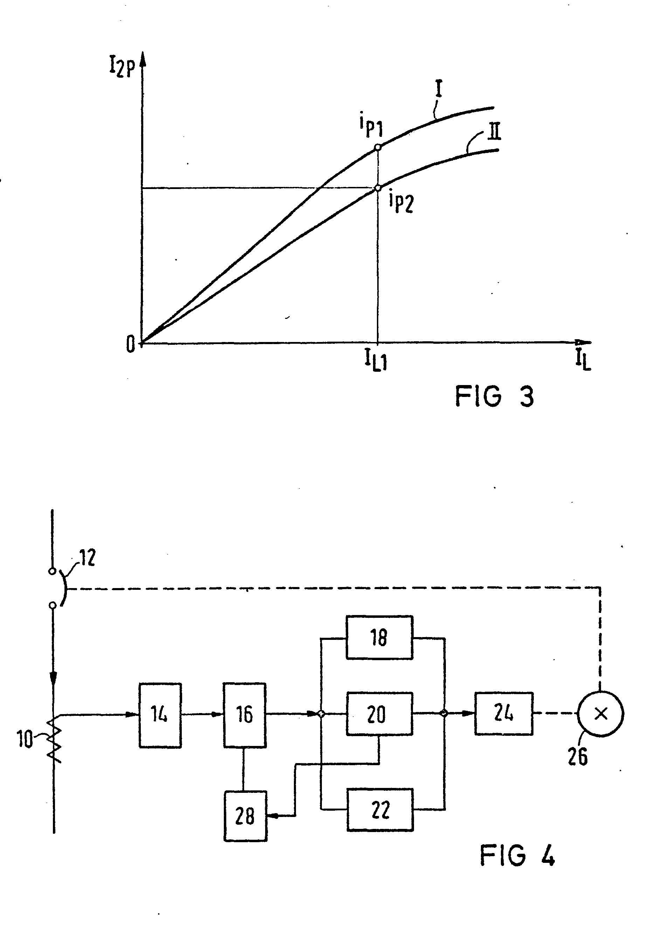

Anhand der Fig. 2a und 2b sei dies näher erläutert. Fig. 2 zeigt den primärseitigen Laststrom IL, Fig. 2b den sekundärseitigen Laststrom I2P, jeweils über der Zeit t, und zwar für den Fall, daß bei t = 0 der Stromkreis geschlossen wird. Der Laststrom IL hängt im wesentlichen von der Impedanz des Stromkreises ab. Nach dem Schließen des Stromkreises fließt vorübergehend für mehrere Halbwellen ein transienter Strom mit einem Gleichstromanteil, bis ein stationärer Zustand erreicht wird. Im Bereich höherer Pegel des transienten Stroms geraten die Stromwandler 10 in die Sättigung, so daß während dieser Zeit der sekundärseitige Laststrom I2P kleiner ist als im stationären Zustand. Dies wird auch aus Fig. 3 deutlich, in der die Kurve I den Zusammenhang zwischen dem primärseitigen Laststrom IL und dem sekundärseitigen Laststrom I2P für den stationären Fall und die Kurve II denselben Zusammenhang für den transienten Strom wiedergibt.

Wie aus den Fig. 2 und 3 ersichtlich, treten bei der Anordnung nach Fig. 1 Probleme auf, wenn der Schwellenwert des verzögerungslosen Auslöseglieds 22 entsprechend dem für den stationären Zustand geltenden Übersetzungsverhältnis der Stromwandler 10 eingestellt ist. Infolge der Dauer der Sättigung der Stromwandler (1 bis 2 Perioden) tritt eine Verzögerung des Ansprechens des Überstromschutzrelais auf, die unerwünscht ist. Als Folge davon mußte das bekannte Überstromschutzrelais in einem Strombereich eingesetzt werden, der geringer als die Schaltkapazität der Schalter war.

Aufgabe der Erfindung ist es, ein Überstromschutzrelais der eingangs angegegebenen Art zu schaffen, das bei voller Ausnutzung der Schaltkapazität der Schalter eine augenblickliche Unterbrechung des Stromkreises bei hohen Lastströmen und ohne Gefahr einer Schalterbeschädigung erlaubt.

Diese Aufgabe wird gemäß der Erfindung durch die Merkmale im kennzeichnenden Teil des Patentanspruchs 1 gelöst.

Bei dieser Lösung wird das durch eine Sättigung herabgesetzte Übersetzungsverhältnis des bzw. der Stromwandler durch ein zeitlich beschränkt entsprechend erhöhtes Übersetzungsverhältnis des Stromspannungsumsetzers kompensiert. Die Schwellenwerte der Auslöseglieder können im Zusammenhang mit dem Übersetzungsverhältnis des Stromspannungsumsetzers so bemessen werden, daß im stationären Fall, die Schaltkapazität des bzw. der Schalter voll ausgenutzt wird. Wenn dann für die Dauer transienter Zustände, in denen eine Sättigung des bzw. der Stromwandler auftreten kann, das Übersetzungsverhältnis des Stromspannungsumsetzers gegenüber dem stationären Zustand erhöht ist, dann kann dadurch eine sättigungsbedingte Verzögerung der Stromkreisunterbrechung mittels des verzögerungslosen Auslösegliedes verhindert werden.

Im folgenden wird die Erfindung anhand von lediglich einen Ausführungsweg darstellenden Zeichnungen näher erläutert. Es zeigt

Fig. 1 schematisch als Blockschaltbild ein bekanntes Überstromschutzrelais,

Fig. 2a, 2b und 3 Kurvenverläufe zur Erläuterung des Einflusses einer Sättigung der Stromwandler,

Fig. 4 ein Blockschaltbild des Überstromschutzrelais gemäß der Erfindung, und

Fig. 5 Kurvenverläufe zur Erläuterung der Funktion der Erfindung.

Das Überstromschutzrelais nach der Erfindung enthält, wie in Fig. 4 dargestellt, dieselben grundlegenden Schaltungsteile wie dasjenige von Fig. 1. Abweichend von dem bekannten Überstromschutzrelais ist der Stromspannungsumsetzer 16 mit einem nicht dargestellten Stellglied zur Änderung seines Umsetzungsverhältnisses versehen. Ein Zeitglied 28 ist mit dem kurzzeitverzögerten Auslöseglied 20 verbunden. Wenn die Ausgangsspannung des Stromspannungsumsetzers 16 den Schwellenwert des kurzzeitverzögerten Auslöseglieds 20 überschreitet, wird das Zeitglied 28 aktiviert und liefert nach Ablauf einer voreingestellten Verzögerungszeit ein Ausgangssignal an das Stellglied im Stromspannungsumsetzer 16, um dessen Umsetzungsverhältnis zu verringern. Dies erfolgt vorzugsweise durch Umschaltung einer inneren Impedanz des Stromspannungsumsetzers 16.

Bei dem bekannten Überstromschutzrelais nach Fig. 1 sind die Schwellenwerte der Auslöseglieder 18 bis 22 entsprechend der Kurve I in Fig. 3 eingestellt, das heißt nach Maßgabe des für den stationären Fall geltenden Übersetzungsverhältnis der Stromwandler 10. Demgegenüber sind bei dem Überstromschutzrelais gemäß der Erfindung diese Schwellenwerte entsprechend der Kurve II in Fig. 3, also nach Maßgabe des im transienten Zustand verringerten Übersetzungsverhältnis der Stromwandler eingestellt. Übersteigt bei dem Überstromschutzrelais nach Fig. 4 ein transienter Laststrom einen Wert, der eine sofortige Auslösung der Schalter 12 erfordert, dann kann das Auslöseglied 22 diese sofortige Schalterbetätigung trotz einer auftretenden Sättigung im Stromwandler 10 bewirken. Das Überstromschutzrelais kann somit zuverlässig bereits in der ersten Halbperiode des Laststroms IL ausgelöst werden. Das Zeitglied 28 sorgt dafür, daß im stationären Zustand das Überstromschutzrelais nicht aufgrund der gegenüber Fig. 1 relativ geringeren Schwellenwerte der Auslöseglieder 18 bis 22 vorzeitig, das heißt also bei im Verhältnis zur Schaltkapazität der Schalter 12 zu geringen Lastströmen ausgelöst wird.

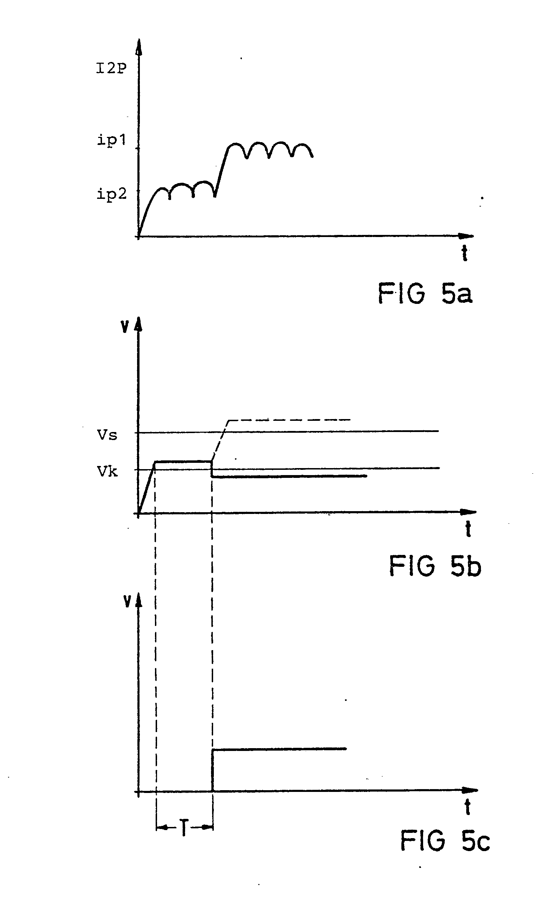

Nachfolgend soll die Arbeitsweise der in Fig. 4 gezeigten Schaltungsteile näher beschrieben werden. Fig. 5 ist ein Wellenformdiagramm, das die verschiedenen Betriebszustände des Überstromschutzrelais von Fig. 4 verdeutlicht. Die Fig. 5a, 5b und 5c gelten für den Fall, daß das Überstromschutzrelais von Fig. 4 bei einem Mehrphasen-Wechselstromkreis mit mindestens drei Phasen eingesetzt wird. Mit IL1 (vgl. Fig. 3) sei ein Wert des Laststroms IL bezeichnet, der so groß ist, daß das kurzzeitverzögerte Auslöseglied 20 ansprechen soll. Entsprechend der Kurve II in Fig. 3 spricht das kurzzeitverzögerte Auslöseglied 20 an, wenn der Eingang des Stromspannungsumsetzers 16 mit einem sekundären Laststrom des Werts ip2 beaufschlagt wird. Da die Dauer dieser Kurzzeitverzögerung im Bereich von mehreren 10 bis zu mehreren 100 ms liegt, gehen die Ströme in den stationären Zustand über, bevor das Auslöseglied 20 ein Ausgangssignal an den Treiber 24 abgibt. Mit dem Übergang in den stationären Zustand erhöht sich bei gleichbleibendem Laststrom IL1 der sekundäre Laststrom von ip2 auf ip1. Wenn dieser Wert ip1 (ohne das erfindungsgemäß vorgesehene Zeitglied 28) zu einer über dem Schwellenwert des Auslöseglieds 22 liegenden Ausgangsspannung des Stromspannungsumsetzers 16 führt, dann würde mit dem Übergang in den stationären Zustand eine sofortige Auslösung des Überstromschutzrelais erfolgen, obwohl der tatsächliche Laststrom IL1 eine derartige sofortige Auslösung gar nicht erforderte.

Damit die vorgenannte sofortige Auslösung verhindert wird, wird, sobald der transiente Strom ip2 einen den Schwellenwert des kurzzeitverzögerten Auslöseglieds 20 entsprechenden Wert übersteigt, das Zeitglied 28 angesteuert. Nach Ablauf der voreingestellten Zeit T (siehe Fig. 5c) bewirkt das Zeitglied 28 eine Umschaltung der inneren Impedanz des Stromspannungsumsetzers 16, so daß durch Verringerung des Übersetzungsverhältnisses des Stromspannungsumsetzers 16, dessen Ausgangsspannung erniedrigt wird, wie dies in Fig. 5b gezeigt ist. Dadurch wird sichergestellt, daß der nach Erreichen des stationären Zustands auf ip1 ansteigende sekundäre Laststrom nicht zu einer über dem Schwellenwert des verzögerungslosen Auslöseglieds 22 liegenden Ausgangsspannung führt.

Im einzelnen zeigt Fig. 5a den sekundärseitigen Laststrom I2P, und zwar in gleichgerichteter Form. Man erkennt aus Fig. 5a zugleich die Wirkung des Maximumdetektors, der jeweils den Strom der Phase auswählt, deren Strom höher als der aller anderen Phasen ist. Fig. 5b zeigt die zugehörige Ausgangsspannung des Stromspannungsumsetzers 16, wobei es sich um eine geglättete Spannung handelt. In Fig. 5b ist gestrichelt der Ausgangsspannungsverlauf des Stromspannungsumsetzers 16 dargestellt, der sich in Abhängigkeit von dem sekundären Laststrom I2P gemäß Fig. 5a ohne die Wirkung des erfindungsgemäß vorgesehenen Zeitglieds 28 einstellen würde. Fig. 5c schließlich zeigt das Ausgangssignal des Zeitglieds 28, das nach einer Zeit T auftritt, nachdem die Ausgangsspannung vom Stromspannungsumsetzer 16 den Schwellenwert des kurzzeitverzögerten Auslöseglieds 20 überschritten hat. Mit Vk ist in Fig. 5b der Schwellenwert des kurzzeitverzögerten Auslöseglieds 20, mit Vs derjenige des verzögerungslosen Auslöseglieds 22 bezeichnet.

## Patentansprüche

1. Überstromschutzrelais mit einem Schalter (12), der in einen vor einem Überstrom zu schützenden Stromkreis geschaltet ist, mit einem in den Stromkreis geschalteten Stromwandler (10), einem mit der Sekundärseite des Stromwandlers verbundenen Stromspannungsumsetzer (16) zur Gewinnung einer dem Laststrom im Stromkreis entsprechenden Spannung, sowie mit einem langzeitverzögerten, einem kurzzeitverzögerten und einem verzögerungslosen Auslöseglied (18, 20, 22), durch die der Schalter (12) abhängig von der Höhe des Laststroms nach einer ersten oder einer demgegenüber kürzeren zweiten Verzögerungszeit oder ohne Verzögerung betätigbar ist, dadurch gekennzeichnet, daß der Stromspannungsumsetzer (16) ein Stellglied zur Änderung seines Übersetzungsverhältnisses aufweist, und daß ein Zeitglied (28) vorgesehen ist, das bei Erreichen des Ansprechschwellenwerts des kurzzeitverzögerten Auslöseglieds (20) betätigt wird und durch dessen Ausgangssignal das Stellglied zur Herabsetzung des Übersetzungsverhältnisses des Stromspannungsumsetzers (16) gesteuert wird.

2. Überstromschutzrelais nach Anspruch 1, dadurch gekennzeichnet, daß das das Übersetzungsverhältnis des Stromspannungsumsetzers (16) ändernde Stellglied aus einer die innere Impedanz des Stromspannungsumsetzers (16) umschaltenden Vorrichtung besteht.

## Claims

1. An overload protection relay, with a switch (12) which is connected into a circuit to be protected from an excess current, with a current transformer (10) which is connected into the circuit, with a current-voltage converter (16) which is connected to the secondary side of the current transformer and which serves to obtain a voltage corresponding to the load current in the circuit, and with a long-therm-delayed trigger element, a short-term-delayed trigger element and a delay-freetrigger element (18, 20, 22) by means of which the switch (12) can be actuated in dependence upon the level of the load current following a first delay time or a comparatively shorter second delay time or without delay, characterised in that the current-voltage converter (16) is provided with a control element which serves to change its transformation ratio, and that a timer (28) is provided which is actuated when the response threshold value of the short-term-delayed trigger element (20) is reached and whose output signal controls the control element in order to reduce the transformation ratio of the current-voltage converter (16).

2. An overload protection relay as claimed in claim 1, characterised in that the control element which changes the transformation ratio of the current-voltage converter (16) comprises a device which switches over the internal impedance of the current-voltage converter (16).

## Revendications

1. Relais de protection contre les surintensités et comportant un coupe-circuit (12) qui est branché dans un circuit devant être protégé visà-vis d'une surintensité, un transformateur d'intensité (6) branché dans le circuit, un convertisseur courant-tension (16) relié au côté secondaire du transformateur d'intensité et servant à délivrer une tension correspondant au courant de charge dans le circuit, ainsi qu'un déclencheur réalisant un retard de longue durée, un déclencheur réalisant un retard de brève durée et un declencheur réagissant sans retard (18, 20, 22), au moyen desquels le coupe-circuit (12) peut être actionné en fonction de l'intensité du courant de charge d'après un premier temps de retard ou après un second temps de retard plus bref que le précédent ou sans retard, caractérisé par le fait que le convertisseur courant-tension (16) comporte un organe de réglage servant à modifier le rapport de conversion, et qu'il est prévu un dispositif de temporisation (28) qui est actionné lorsque la valeur de seuil de réponse du déclencheur (20) réalisant un retard de brève durée est atteinte, et dont le signal de sortie commande l'organe de réglage servant à réduire le rapport de conversion du convertisseur couranttension (16).

2. Relais de protection contre les surintensités suivant la revendication 1, caractérisé par le fait que l'organe de réglage modifiant le rapport de conversion du convertisseur courant-tension (16) est constitué par un dispositif commutant l'impédance interne du convertisseur courant-tension (16).

FIG 1

FIG 2a

FIG 2b

FIG 3

FIG 4

FIG 5a

FIG 5b

FIG 5c